# EUROPEAN PATENT SPECIFICATION

(11) **EP 1 794 047 B1**
(45) Date of publication and mention of the grant of the patent: **05.01.2011**
(21) Application number: 05787670.8
(22) Date of filing: 22.09.2005
(51) Int. Cl.: B62J 99/00, B62K 11/14, B62J 23/00

(54) **HANDLE COVER APPARATUS FOR A MOTORCYCLE**
GRIFFABDECKUNGSVORRICHTUNG FÜR EIN MOTORRAD
APPAREIL DE CACHE DE POIGNÉE POUR MOTOCYCLETTE

(30) Priority: 28.09.2004 JP 2004282599
(43) Date of publication of application: 13.06.2007
(73) Proprietor: Honda Motor Co., Ltd., Tokyo 107-8556 (JP)
(72) Inventor: YAMAGUCHI, Masaaki c/o Honda R&D Co., Ltd., Saitama 351-0193 (JP); PHOLCHAROEN, Sontaya c/o Honda R&D Co., Ltd., Saitama 351-0193 (JP); UMEZAWA, Hisashi c/o Honda R&D Co., Ltd., Saitama 351-0193 (JP); OTSUBO, Mamoru c/o Honda R&D Co., Ltd., Saitama 351-0193 (JP); KODAMA, Makoto c/o Honda R&D Co., Ltd., Saitama 351-0193 (JP)
(74) Representative: Trossin, Hans-Jürgen
(86) International application number: PCT/JP2005/018060
(87) International publication number: WO 2006/035921

(56) References cited:
- PATENT ABSTRACTS OF JAPAN vol. 2000, no. 02, 29 February 2000 (2000-02-29) & JP 11 321750 A (NIPPON SEIKI KK), 24 November 1999 (1999-11-24)
- PATENT ABSTRACTS OF JAPAN vol. 2000, no. 26, 1 July 2002 (2002-07-01) & JP 2001 255175 A (NIPPON SEIKI CO LTD), 21 September 2001 (2001-09-21)

## Description

### Technical Field:

The present invention relates to a handle cover apparatus for a motorcycle in which a meter opening is formed on a handle cover for covering a steering handle, and a meter unit is mounted so as to expose an indicator surface from the meter opening.

### Background Art :

JP-B2-3204479 discloses a handle cover apparatus for a motorcycle in which a meter opening is formed on a handle cover for covering a steering handle.

In the apparatus disclosed in JP-B2-3204479, the handle cover includes front and rear cover covering the steering handle from the front and rear and connected to each other. The meter unit is mounted to the rear cover so as to expose an indicator surface from the meter opening provided on the rear cover. Therefore, when the shape of the meter unit is changed, the shape of the meter opening must be changed, and at least the rear cover out of the handle cover must be changed, whereby increase in cost is resulted.

A handle cover apparatus of a motorcycle according to the preamble part of claim 1 is disclosed in JP 11 321750 A and comprises a handle cover body having a meter opening and a sub cover mounted to the handle cover body to cover an outer peripheral portion of the indicator surface and a peripheral edge of the meter opening. In this conventional handle cover apparatus, the sub cover is attached to the handle cover body by a snap-fit connection, wherein downwardly extending latches of the sub cover engage corresponding recesses of the handle cover body.

Further, JP 2001 255175 A discloses a handle cover apparatus for a motorcycle, wherein a meter unit is interposed between an upper cover and a lower cover. The upper cover covers a peripheral edge of the meter unit and is mounted to the lower cover by means of a snap-fit connection, wherein the lower cover is fastened to the vehicle frame.

### Disclosure of the Invention

It is an object of the present invention to provide a handle cover apparatus for a motorcycle in which variations in shape of the meter unit is coped with while increase in cost is restricted and a stable structure is maintained also during operation of the motorcycle.

In accordance with the present invention, a handle cover apparatus of a motorcycle according to claim 1 is provided. Such handle cover apparatus comprises a handle cover that covers a steering handle; and a meter opening formed on the handle cover. In the handle cover apparatus, an indicator surface of a meter unit is exposed from the meter opening. Further, the handle cover includes: a handle cover body having the meter opening; and a sub cover that covers an outer peripheral portion of the indicator surface and a peripheral edge of the meter opening, and is mounted to the handle cover body.

In accordance with one or more embodiments of the present invention, the sub cover may detachably be secured to the handle cover body.

In accordance with one or more embodiments of the present invention, the meter unit may be mounted to the handle cover body.

In accordance with one or more embodiments of the present invention, the handle cover body may include front and rear cover halves which cover the steering handle from the front and rear and are connected to each other.

Other aspects and advantages of the invention will be apparent from the following description and the appended claims.

### Brief description of the drawings:

Fig. 1 is a general side view of a motorcycle.
Fig. 2 is an enlarged front view of Fig. 1 viewed in the direction of an arrow 2.
Fig. 3 is a cross-sectional view taken along a line 3-3 in Fig. 2.
Fig. 4 is a back view of a rear cover half in a state in which a sub cover is mounted when viewed in the direction of an arrow 4 in Fig. 3.
Fig. 5 is a back view of the rear cover half corresponding to Fig. 4 in a state in which the sub cover is removed.
Fig. 6 is a cross-sectional view taken along a line 6-6 in Fig. 2 in a state in which the sub cover is omitted.
Fig. 7 is a perspective view of the sub cover.

Note that in the figures, reference numeral 13 denotes a steering handle, 51 denotes a handle cover, 64 denotes a handle cover body, 65 denotes a sub cover, 66 denotes a front cover half, 67 denotes a rear cover half, 84 denotes a meter opening, 98 denotes a meter unit, and 99 denotes an indicator surface.

### Best Mode for Carrying Out the Invention:

An embodiment of the present invention will now be described based on an example of the present invention shown in attached drawings.

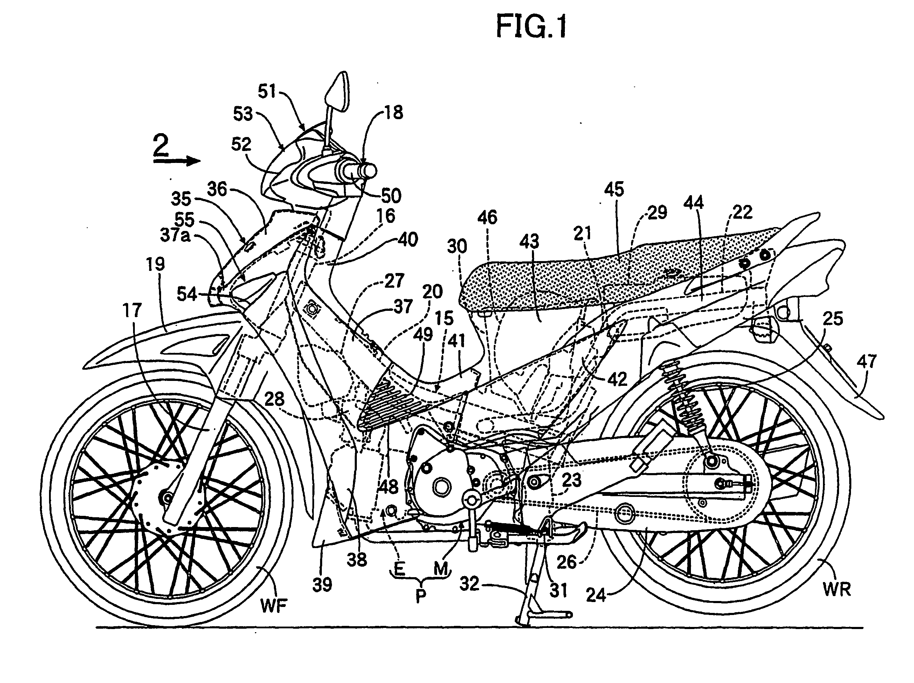

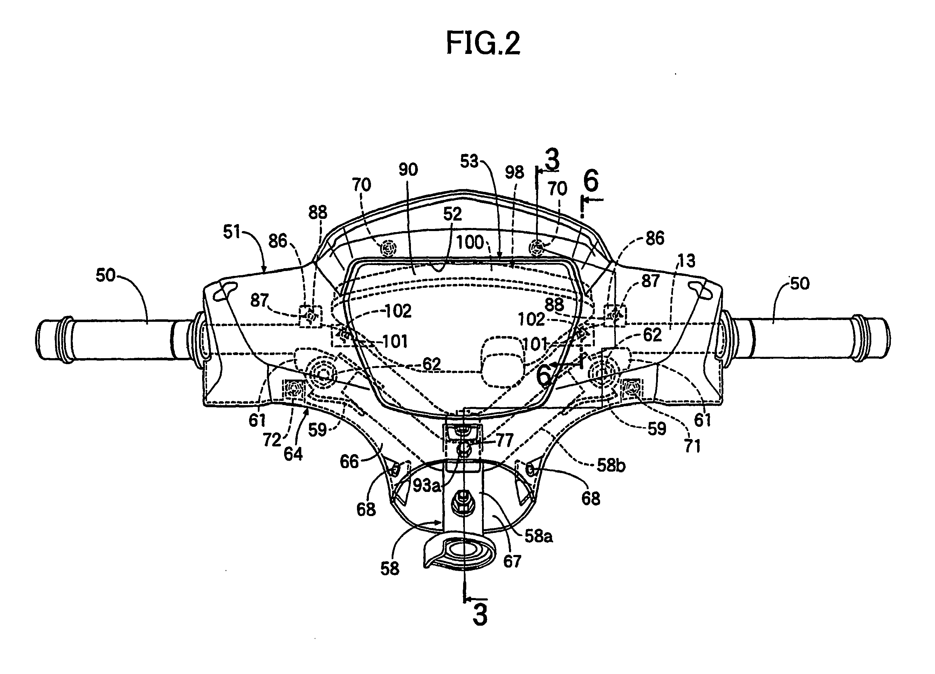

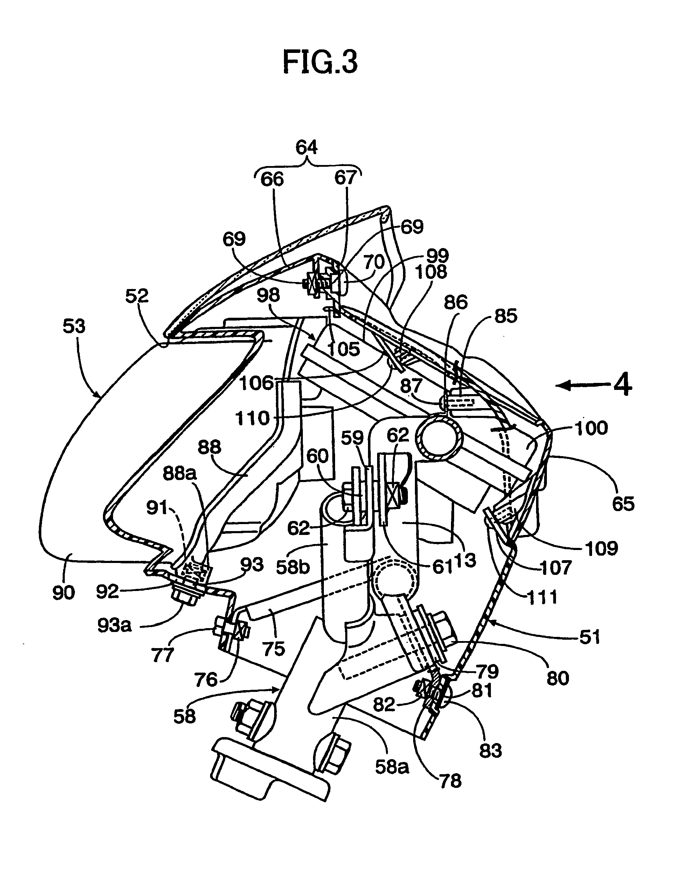

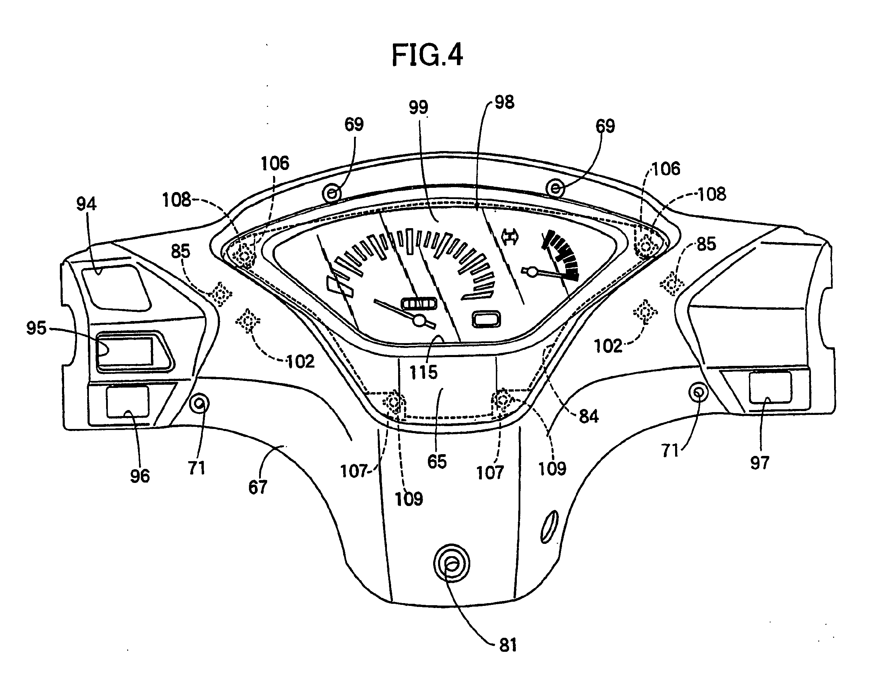

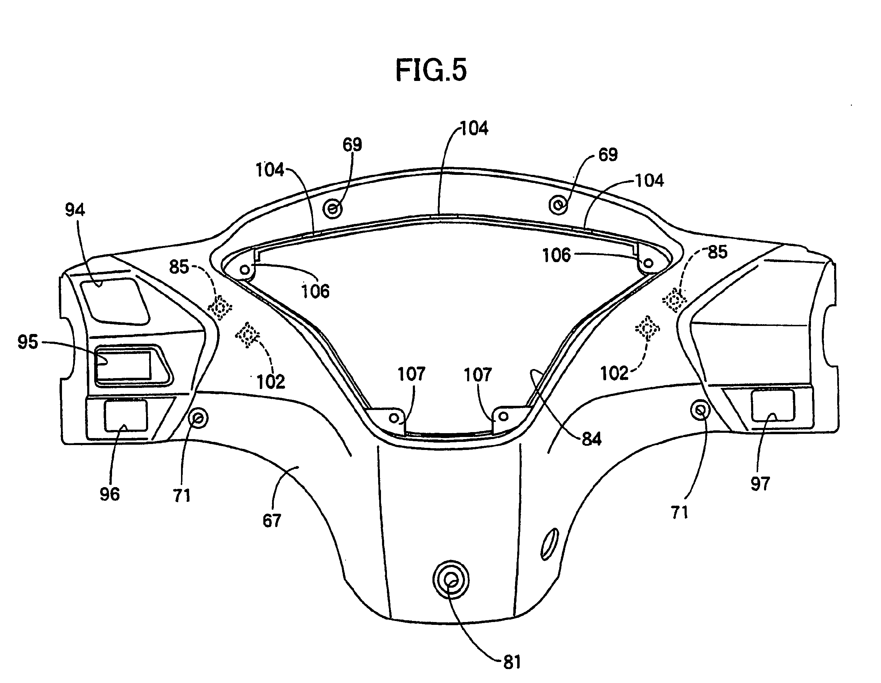

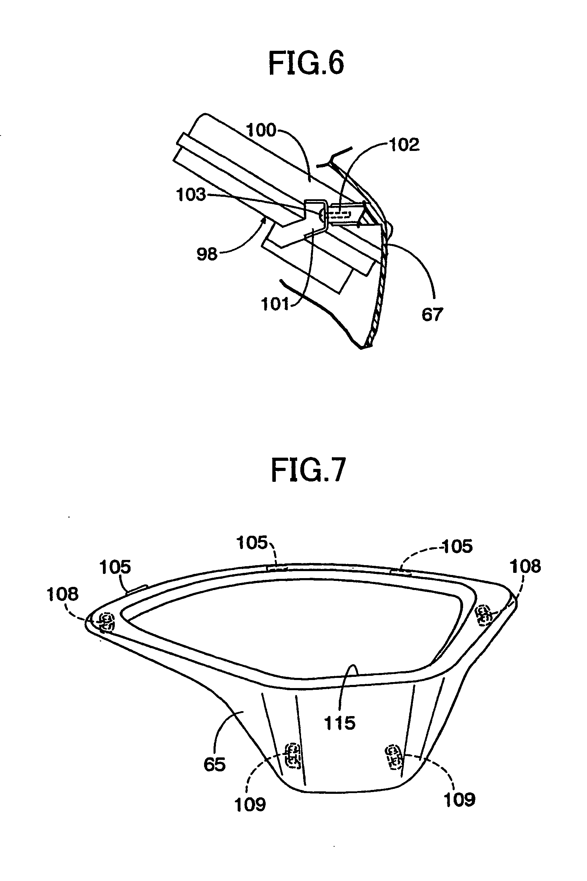

Fig. 1 to Fig. 7 shows an embodiment of the present invention. Fig. 1 is a general side view of a motor cycle; Fig. 2 is an enlarged front view of Fig. 1 viewed in the direction of an arrow 2; Fig. 3 is a cross-sectional view of Fig. 2 taken along a line 3-3; Fig. 4 is a back view of a rear cover half in a state in which a sub cover is attached when viewed in the direction of an arrow 4 in Fig. 3; Fig. 5 is a back view of the rear cover half corresponding to Fig. 4 in a state in which the sub cover is removed; Fig. 6 is a cross-sectional view taken along a line 6-6 in Fig. 2 in a state in which the sub cover is omitted; and Fig. 7 is a perspective view of the sub cover.

In Fig. 1, a front fork 17 for bearing a front wheel WF is steerably supported by a head pipe 16 provided at a front end of a vehicle body frame 15 of the motorcycle. A bar-shaped steering handle 18 is connected to the upper end of the front fork 17, and a front fender 19 which covers above the upper portion of the front wheel WF is supported by the front fork 17.

The vehicle body frame 15 includes the head pipe 16 at the front end, a main pipe 20 extending rearward and downward from the head pipe 16, a pair of left and right rear pipes 21... fixed to the rear end of the main pipe 20 and extending rearward and upward therefrom, seat rails 22...integrally connected to rear ends of the rear pipes 21... respectively, and extending substantially horizontally, and a pair of left and right supporting frames 23... extending from the rear ends of the main pipe 20 downward.

Rear forks 24 for bearing the rear wheel WR is supported by the supporting frames 23... and rear cushions 25 are provided between the rear portions of the vehicle body frame 15 and the rear forks 24.

At the midsection of the vehicle body frame 15, a power unit P including an engine E and a transmission M is mounted so as to be positioned below the main pipe 20, and the output from the transmission M is transmitted to the rear wheel WR via a chain 26.

An air cleaner 27 and a carburetor 28 provided between the air cleaner 27 and the engine E are disposed above the engine E, and a fuel tank 29 to be disposed above the rear wheel WR and a storage box 30 to be disposed in front of the fuel tank 29 are supported by the rear portion of the vehicle body frame 15. A stand 32 is rotatably mounted via a stand shaft 31 at the lower portions of supporting frames 23... of the vehicle body frame 15.

A portion of the vehicle body frame 15 other than the supporting frames 23..., part of the engine E, the air cleaner 27, the carburetor 28, the fuel tank 29, and the storage box 30 are covered by a vehicle body cover 35 formed of synthetic resin.

The vehicle body cover 35 includes a pair of left and right main pipe side covers 37... connected to both sides of a front cover 36 so as to cover the front cover 36 which covers the head pipe 16 from the front, the main pipe 20, part of the engine E, the air cleaner 27, and the carburetor 28 from the sides; a pair of left and right leg shields 38... detachably attached to the main pipe side covers 37... so as to cover the front portions of the both main pipe side covers 37... from the sides; an under cover 39 for connecting the lower portions on the front sides of the both main pipe side covers 37...; a main pipe upper cover 40 which connects between the upper portions of the main pipe side covers 37... so as to cover the head pipe 16 from the rear side and to cover the front portion of the main pipe 20 from above; a center cover 41 to be joined to rear portions of the both main pipe side covers 37... and the main pipe upper cover 40 so as to cover the midsection of the main pipe 20 from above; a pair of left and right side covers 42... connected to the rear portions of the both main pipe side covers 37... so as to cover the rear portion of the main pipe 20 and the both rear pipes 21... from the sides; a front body cover 43 extending upward from the rear portion of the center cover 41 and the upper portions of the both side covers 42... in substantially U-shape opened rearward in lateral cross section; and a pair of left and right rear body covers 44... connected to the rear portions of the both side covers 42... and the rear portion of the front body cover 43 so as to cover the both seat rails 22... from the sides.

Disposed on the front body cover 43 and the both rear body covers 44...is a tandem-type riding seat 45 supported by the front body cover 43 at a front end thereof so as to be capable of opening and closing. Arranged below the riding seat 45 in the closed state are the storage box 30 capable of storing and taking out a helmet 46 or the like when the riding seat 45 is opened, and the fuel tank 29 which allows oil feeding when the riding seat 45 is opened is disposed on the rear side of the storage box 30. The sides of the storage box 30 are covered by the side covers 42... and the front body cover 43 and the sides of the fuel tank 29 are covered by the rear body cover 44.

A rear fender 47 which covers the rear wheel WR from above is connected to the rear body covers 44.... Openings 48... are formed between the rear portions of the main pipe side covers 37... and the lower front portions on both sides of the center cover 41, and the openings 48... are provided with louvers 49... for sucking cold wind toward the power unit P.

Grips 50... are provided on both ends of the steering handle 18, and the portion of the steering handle 18 other than the portions to be provided with the grips 50 is covered by a handle cover 51 formed of synthetic resin.

A headlight opening 52 is provided at the center portion of a front face of the handle cover 51, and a headlight 53 is mounted to the handle cover 51 so as to be exposed from the headlight opening 52. Protruded portions 37a... protruded from both side ends of the front cover 36 sideward are integrally provided on the ends of the main pipe side covers 37... of the vehicle body cover 35, and front winkers 55... exposed from front winker openings 54... provided on the protruded portion 37a... are mounted to the protruded portions 37a....

Referring also Fig. 2 and Fig. 3, a steering handle 13 is to be fixed to a handle post 58, and the handle post 58 includes a connecting cylinder 58a to be connected to the upper portion of the front fork 17, and a supporting cylinder 58b to be bent into a substantially V-shape opening upward and fixed to the upper end of the connecting cylinder 58a, and the bar-shaped steering handle 13 being bent at the center portion downward corresponding to the supporting cylinder 58b is fixedly supported by the supporting cylinder 58b. In other words, brackets 59... are fixed to both ends of the supporting cylinder 58b, mounting plates 61... including mount rubbers 60 ... sandwiched by the brackets 59... are fixed to the steering handle 13, and bolts 62... to be inserted into the brackets 59... and the mount rubbers 60... are screwed into weld nuts 63... fixed to the mounting plates 61.... Therefore, by tightening the bolts 62..., the steering handle 13 is mounted to the handle post 58 via the mount rubbers 60....

The steering handle 13 is to be covered by the handle cover 51 except for the grips 50, 50 at both ends thereof, and the handle cover 51 includes a handle cover body 64 and a sub cover 65 detachably attached to the handle cover body 64. The handle cover body 64 includes front and rear cover halves 66, 67 formed of synthetic resin for covering the steering handle 13 from the front and rear, and being separably connected to each other.

Referring also to Fig. 4, the front cover half 66 and the rear cover half 67 are secured to each other by a pair of screw members 68, 68 inserted from the front face side of the front cover half 66 at two positions near the center of the lower portions of the cover halves 66, 67, a pair of screw members 70, 70 inserted from the back face side of the rear cover half 67 into insertion holes 69, 69 provided on the rear cover half 67 at two positions near the center of the upper portions of the both cover halves 66, 67, and a pair of screw members 72, 72 inserted from the back face side of the rear cover half 67 into insertion holes 71, 71 provided on the rear cover half 67 at both sides of the lower portions of the both cover halves 66, 67.

A proximal end of a stay 75 extending downward at the center of the front cover half 66 is fixed to the center portion of the steering handle 13, and the front cover half 66 is attached to the steering handle 13 by screwing a bolt 77 through the lower center portion of the front cover half 66 from the front face side thereof into a weld nut 76 secured at the distal end of the stay 75 and tightening the same.

A stay 78 opposing to the inner surface of the lower center portion of the rear cover half 67 is attached to the upper portion of the connecting cylinder 58b of the handle post 58 by a bolt 80 via a mount rubber 79, and the lower center portion of the rear cover half 67 is formed with an insertion hole 81 opposing to the stay 78, whereby the lower center portion of the rear cover half 67 is attached to the handle post 58 via the mount rubber 79 by screwing a screw member 83 inserted into the insertion hole 81 from the back face side of the rear cover half 67 into a weld nut 82 fixed to the stay 78.

A meter opening 84 is provided at the center portion of the rear cover half 67, and supporting bosses 85 projecting toward the front cover half 66 are provided on the inner surface of the rear cover half 67 on both sides of the meter opening 84. On the other hand, supporting plates 86... which oppose and come into abutment with the supporting bosses 85 are secured to the steering handle 13, and screw members 87 ... to be inserted from the front, that is, from the side of the front cover half 66, into the respective supporting plate portions 86... are screwed into the supporting bosses 85.... Accordingly, the rear cover half 67 is supported also by the steering handle 13.

A headlight opening 52 formed at the center of the front cover half 66 is for disposing the headlight 53, and the headlight 53 is formed into a bawl shape opening toward the front and includes a housing 88 formed of synthetic resin and provided with a reflector on the inner surface thereof, a bulb (not shown) to be detachably attached to the housing 88 so as to be disposed in the housing 88, and a lens 90 covering the bulb from the front attached to the housing 88 so as to close the opening end of the housing 88.

The upper portion of the housing 88 of the headlight 53 is supported by the front cover half 66 so as to be capable of pivoting in the fore-and-aft direction, and a leg portion 88a which comes into abutment with the lower inner surface of the front cover half 66 is integrally provided at the lower portion of the housing 88, and a nut 91 is provided on the leg portion 88a. On the other hand, a long hole 92 elongated in the fore-and-aft direction is formed at the lower portion of the front cover half 66, and a bolt 93 which includes a larger diameter head 93a which can come into abutment and engagement with the outer surface of the lower portion of the front cover half 66 is screwed through the long hole 92 into the nut 91. The optical axis of the headlight 53 can be adjusted by adjusting the position of the bolt 93 along the longitudinal direction of the long hole 92.

Referring also to Fig. 5, three switch openings 94, 95, 96, aligning in the vertical direction, are formed on the left side of the meter opening 84 at the center of the rear cover half 67, and a dimmer switch, a direction indicator switch, and a horn switch, not shown, are disposed so as to be exposed from the respective switch openings 94-96. A switch opening 97 is provided at the lower portion of the rear cover half 67 on the right side of the meter opening 84, and a start switch, not shown, is disposed so as to be exposed from the switch opening 97.

A meter unit 98 is stored in the handle cover body 64 so as to expose an indicator surface 99 from the meter opening 84 on the rear cover half 67, and the meter unit 98 is mounted to the rear cover half 67.

In Fig. 6, mounting arms 101... are provided on both left and right sides of a housing 100 of the meter unit 98. On the other hand, supporting bosses 102... which oppose and come into abutment with the mounting arms 101... are integrally projected from the inner surface of the rear cover half 67 on both sides of the meter opening 84, and screw members 103... to be inserted through the mounting arms 101... from the side of the front cover half 66 into the supporting bosses 102.... Accordingly, the meter unit 98 is attached to the rear cover half 67, that is, the handle cover body 64 with the indicator surface 99 exposed from the meter opening 84.

Referring also to Fig. 7, the sub cover 65 has an opening 115 for allowing the major portion of the indicator surface 99 of the meter unit 98 to be exposed therefrom, and is formed of synthetic resin so as to cover the outer peripheral portion of the indicator surface 99 and the peripheral edge of the meter opening 84, and is mounted to the rear cover half 67, that is, the handle cover body 64. In addition, while the front and rear cover halves 66, 67 which constitute the handle cover body 64 are formed of colored resin, at least the outer surface of the sub cover 65 is coated.

Three positioning holes 104... are formed on the rear cover half 67 at positions above the meter opening 84 at distances in the lateral direction, and positioning projections 105... to be detachably fitted into positioning holes 104... are integrally projected from the front end of the sub cover 65.

As clearly indicated in Fig. 3 to Fig. 5, mounting portions 106, 106 overhung inwardly of the meter opening 84 are integrally provided on the rear cover half 67 on both sides of the upper portion of the meter opening 84, and mounting portions 107, 107 overhung inwardly of the meter opening 84 are integrally provided on the rear cover half 67 at both sides of the lower portion of the meter opening 84. On the other hand, supporting bosses 108... which oppose and come into abutment with the mounting portions 106... and supporting bosses 109... which oppose and come into abutment with the mounting portions 107... are in integral abutment with the inner surface of the sub cover 65. Screw members 110... to be inserted into the mounting portions 106... from the inside of the rear cover half 67, that is, from the front cover half 66 are screwed into the supporting bosses 108..., and screwmembers 111 ... to be inserted through the mounting portions 107... from the inside of the rear cover half 67, that is, from the side of the front cover half 66 are screwed into the supporting bosses 109..... In other words, the sub cover 65 is detachably secured to the rear cover half 67, that is, the handle cover body 64.

Describing the operation of this example, although the meter opening 84 is provided on the handle cover 51 for covering the steering handle 13, and the meter unit 98 is attached to the meter opening 84 so as to allow the indicator surface 99 to be exposed therefrom, the handle cover 51 includes the handle cover body 64 having the meter opening 84 and the sub cover 65 which covers the outer peripheral portion of the indicator surface 99 and the peripheral edge of the meter opening 84, and mounted to the handle cover body 64.

Therefore, since variations of the shape of the meter unit 98 can be coped with only by changing the sub cover 65 and hence it is not necessary to change the handle cover body 64, variations of the shape of the meter unit 98 can be coped with while preventing increase in cost. Since the sub cover 65 can be detachably secured to the handle cover body 64, replacement and change of the sub cover 65 are facilitated.

In addition, while the front and rear cover halves 66, 67 which constitute the handle cover body 64 are formed of colored resin, at least the outer surface of the sub cover 65 is coated, which makes the periphery of the indicator surface 99 of the meter unit 98 to standout, and contributes to improvement of the appearance of the periphery of the indicator surface 99.

Since the meter unit 98 is mounted to the handle cover body 64, the sub cover 65 need not have a function to support the meter unit 98, and hence the size of the sub cover 65 can be reduced.

Further more, since the handle cover body 64 includes the front and rear cover halves 66, 67 which covers the steering handle 13 from the front and rear and are connected to each other, assembly of the handle cover 51 so as to cover the steering handle 13 is facilitated.

It will be apparent to those skilled in the art that various modifications and variations can be made to the described preferred embodiments of the present invention without departing from the scope of the invention. Thus, it is intended that the present invention cover all modifications and variations of this invention consistent with the scope of the appended claims.

### Industrial Applicability:

In a handle cover apparatus for a motorcycle in which a meter opening is provided on a handle cover which covers the steering handle and a meter unit is mounted so as to expose an indicator surface from the meter opening, variations in shape of the meter unit can be coped with while restricting increase in cost.

## Claims

1. A handle cover apparatus of a motorcycle, comprising:
a handle cover (64) that covers a steering handle (13); and
a meter opening (84) formed on the handle cover (64), wherein an indicator surface (99) of a meter unit (98) is exposed from the meter opening (84);
wherein the handle cover (64) includes:
a handle cover body (64) having the meter opening (84); and
a sub cover (65) that covers an outer peripheral portion of the indicator surface (99) and a peripheral edge of the meter opening (84), and is mounted to the handle cover body (64),
**characterized in that**
the handle cover body (64) comprises mounting portions (106, 107) overhung inwardly of the meter opening (84) and integrally provided on a rear cover half (67) of the handle cover body (64),
the sub cover (65) comprises integral supporting bosses (108, 109) on its inner surface, and
screw members (110, 111) are inserted from the inside through the mounting portions (106, 107) into the supporting bosses (108, 109).

2. The handle cover apparatus according to Claim 1, wherein the sub cover (65) is detachably secured to the handle cover body (64).

3. The handle cover apparatus according to Claims 1 or 2, wherein the meter unit (98) is mounted to the handle cover body (64).

4. The handle cover apparatus according to any one of Claim 1 to 3, wherein the handle cover body (64) includes front and rear cover halves (66, 67) which cover the steering handle (13) from the front and rear and are connected to each other.

## Patentansprüche

1. Lenkerabdeckungsvorrichtung eines Kraftrads, umfassend:
eine Lenkerabdeckung (64), die eine Lenkstange (13) abdeckt; und
eine Messwerköffnung (84), die in der Lenkerabdeckung (64) ausgebildet ist, worin eine Anzeigeoberfläche (99) einer Messwerkeinheit (98) von der Messwerköffnung (84) freiliegt;
worin die Lenkerabdeckung (64) enthält:
einen Lenkerabdeckungskörper (64), der die Messwerköffnung (84) aufweist; und
eine Nebenabdeckung (65), die einen Außenumfangsabschnitt der Anzeigeoberfläche (99) und einen Umfangsrand der Messwerköffnung (84) abdeckt und an dem Lenkerabdeckungskörper (64) angebracht ist,
**dadurch gekennzeichnet, dass** der Lenkerabdeckungskörper (64) Befestigungsabschnitte (106, 107) aufweist, die einwärts der Messwerköffnung (84) überhängen und einstückig an einer hinteren Abdeckungshälfte (67) des Lenkerabdeckungskörpers (64) vorgesehen sind,
wobei die Nebenabdeckung (65) an ihrer Innenoberfläche einstückige Tragnaben (108, 109) aufweist, und
Schraubelemente (110, 111) von der Innenseite durch die Befestigungsabschnitte (106, 107) in die Tragnaben (108, 109) eingesetzt sind.

2. Die Lenkerabdeckungsvorrichtung nach Anspruch 1, worin die Nebenabdeckung (65) an dem Lenkerabdeckungskörper (64) abnehmbar befestigt ist.

3. Die Lenkerabdeckungsvorrichtung nach Anspruch 1 oder 2, worin die Messwerkeinheit (98) an dem Lenkerabdeckungskörper (64) angebracht ist.

4. Die Lenkerabdeckungsvorrichtung nach einem der Ansprüche 1 bis 3, worin der Lenkerabdeckungskörper (64) vordere und hintere Abdeckungshälften (66, 67) enthält, die die Lenkstange (13) von vorne und hinten abdecken und miteinander verbunden sind.

## Revendications

1. Appareil de cache-poignée d'un motocycle comprenant :
un cache-poignée (64) qui couvre une poignée de direction (13) ; et
une ouverture de compteur (84) formée sur le cache-poignée (64), où une surface d'indicateur (99) d'une unité de compteur (98) est exposée depuis l'ouverture de compteur (84) ;
où le cache-poignée (64) inclut :
un corps de cache-poignée (64) comportant l'ouverture de compteur (84) ; et
un sous-cache (65) qui couvre une portion périphérique externe de la surface d'indicateur (99) et un bord périphérique de l'ouverture de compteur (84), et est monté sur le corps de cache-poignée (64),
**caractérisé en ce que**
le corps de cache-poignée (64) comprend des portions de montage (106, 107) en surplomb vers l'intérieur de l'ouverture de compteur (84) et solidairement disposées sur une moitié de cache arrière (67) du corps de cache-poignée (64),
le sous-cache (65) comprend des bosses de support solidaires (108, 109) sur sa surface interne, et
des organes de vis (110, 111) sont insérés depuis l'intérieur dans les bosses de support (108, 109) par l'intermédiaire des portions de montage (106, 107).

2. Appareil de cache-poignée selon la revendication 1, dans lequel le sous-cache (65) est fixé de façon démontable sur le corps de cache-poignée (64).

3. Appareil de cache-poignée selon la revendication 1 ou 2, dans lequel l'unité de compteur (98) est montée sur le corps de cache-poignée (64).

4. Appareil de cache-poignée selon l'une quelconque des revendications 1 à 3, dans lequel le corps de cache-poignée (64) inclut des moitiés de cache avant et arrière (66, 67) qui couvrent la poignée de direction (13) depuis l'avant et l'arrière et sont raccordées l'une à l'autre.
